# EUROPEAN PATENT SPECIFICATION

(11) **EP 1 803 984 B1**
(45) Date of publication and mention of the grant of the patent: **18.08.2010**
(21) Application number: 06026280.5
(22) Date of filing: 19.12.2006
(51) Int. Cl.: F16M 7/00

(54) **Levelling foot used to provide steady fixing of a helical spring inserted along its threaded stem**
Nivellierschuh mit Befestigung eines auf ihrem Gewindestab montierte Schraubenfeder
Pied de mise à niveau avec fixation d'un ressort hélicoïdal monté le long de sa tige filetée

(30) Priority: 27.12.2005 IT MC20050141
(43) Date of publication of application: 04.07.2007
(73) Proprietor: Perini, Carlo, 60044 Fabriano (AN) (IT)
(72) Inventor: Perini, Carlo, 60044 Fabriano (AN) (IT)
(74) Representative: Baldi, Claudio

(56) References cited:
- DE-A1- 1 923 424
- FR-A- 2 214 066
- FR-A- 2 538 078
- GB-A- 2 267 638
- US-A- 2 465 742
- US-A1- 2002 109 054

## Description

The present patent application relates to a levelling foot for electrical or electromechanical devices, used to provide steady fixing of a helical spring inserted in its threaded stem.

As it is known, many electrical or electromechanical devices must be operated on a flat steady position on the surface where they are installed, especially if vibrations are generated during operation and the support surface is not perfectly levelled.

Due to this specific need, the said devices are normally provided with levelling feet, of the type generally composed of a threaded cylindrical stem protruding from a base, which is designed to engage with a suitable threaded hole at the base of the device, and of a support element made of rubber or other equivalent soft material, designed to provide floor support according to the desired coefficient of friction and hardness.

In particular, the operation of the foot is such that the distance between the base of the device and the support surface can be adjusted by applying a torsional moment to the threaded stem.

The threaded stem is normally made of metal and the support element is generally applied to it by means of a co-moulding, co-injection or co-vulcanization process.

In case of such a traditional foot, adjustment is then stabilised to prevent the foot from rotating further and losing the correct adjustment in height.

The said devices transmit considerable stress to the feet (i.e. strong vibrations, including lateral movements), causing the accidental rotation of the feet and impairing the adjustment in height and, consequently, the perfect planarity of the electrical or electromechanical device.

In order to stabilise the adjustment of the said feet, some alternative solutions are currently available, based on the interposition of suitable locking means between each foot and the relevant threaded hole provided at the base of the device.

In some cases, the said locking means are represented by traditional lock-nuts that prevent the accidental rotation of the stem, being tightened against the threaded hole in which the stem of each foot is engaged.

In other cases, the locking function is entrusted to a helical spring inserted along the threaded stem of each foot and compressed when the stem of the foot is screwed into the relevant threaded hole.

This operation progressively reduces the distance between the hole in which the threaded stem is engaged and the traditional lower base, thus gradually reducing the distance between the turns of the springs compressed between the hole and the base.

Due to compression, the spring maintains a certain load between the threaded stem of the foot and the relevant motherscrew in order to prevent the thread mutual sliding.

With reference to the said prior technique, in spite of their sufficient reliability, sometimes levelling feet with lock-nut are not used by the installer, perhaps because of lack of attention, negligence or because of the intrinsic difficulties encountered in reaching and adjusting these locking elements.

On the other side, although it is not as theoretically reliable as the lock-nut, the solution based on the interposition of the spring between the foot and the relevant threaded hole has a great advantage, because it does not require the installer's intervention and is capable of providing a continuous locking function.

In view of the above, the decision to insert a similar helical spring along the threaded stem of a levelling foot is getting more and more popular with manufacturers of electrical and electromechanical devices.

However, it must be noted that the installation of a similar spring involves serious operative problems, especially in case of automated work processes, both when individual components are used (i.e. the levelling foot and the relevant independent helical spring) and when the spring is preassembled to the foot.

If separate elements are used and fitted to the electrical or electromechanical device upon assembly, the problem is represented by the fact that the assembly of levelling feet is generally one of the many phases of automatic assembly lines with very articulated and complex structure.

The said automatic lines are often the bottleneck of the production installation and therefore even small jamming, which is potentially very frequent (due to the difficulties encountered in assembling the said small pieces) can cause serious inefficiencies to expensive production systems.

On the other hand, another problem is often experienced when the spring is preassembled to the foot and the spring/foot assembly is assembled automatically. Reference is made to the uncoupling of the spring from the foot during loading, alignment, transport, positioning (with considerable vibrations) and screwing.

In the spring/foot assemblies available on the market, the spring is held onto the foot because of the interference against the rubber support element associated with the threaded stem.

More precisely, the support element is provided with a central hole designed to engage the threaded stem provided with a lower annular projection under which the last turn (or the last turns) of the helical spring inserted in the threaded stem is exactly housed and locked.

In this way, the spring should not uncouple, not even accidentally, from the rubber support element, and therefore should not lose its correct operative position in the levelling foot.

However, the attempts that have been made so far to find an efficacious practical actuation to this fixing solution of the helical spring to the rubber support element have not given reliable results.

This is because the annular projections of the rubber support elements are not capable of holding the last turns of the springs efficaciously in case of vibrations produced during mounting, transport and installation.

US2002/0109054 discloses a levelling foot comprising a tread stud with a jam nut to stabilise the position of thread stud, after the adjustment of the height of the levelling foot.

The specific purpose of the present invention according to claim 1 is to provide a final solution for the efficacious fixing of the helical spring inserted along the threaded stem of a levelling foot, usually provided with a support element made of rubber or any other similar soft, shock-absorbing material.

The present invention is based on the fact that the fixing point of the last turn of the spring is obtained on the lower section of the threaded stem along which the spring is inserted, and not in the lower area of the hole provided on the structure of the rubber support element.

Practically, the fixing point of the last turn (or turns) of the helical spring is represented by an annular projection obtained in the metal structure of the threaded stem.

Evidently, due to its rigid indeformable metal structure, the projection efficaciously holds the last turns of the spring also in case of strong vibrations produced during traditional work processes.

This brief description of the inventive idea demonstrates the advantages of the present invention compared to the prior technique: reference is made to the provision of annular locking projections for the compression springs in the rubber support elements.

Firstly, as regards the locking of the helical spring, the cooperation between the metal of the spring and the metal of the annular projection on the lower section of the threaded stem is more reliable - also in case of extreme stress - than the cooperation established between the metal of the spring and the rubber of the support element of the foot according to the prior technique.

Another advantage is found during the production process of similar levelling feet, since each annular projection on the threaded stem of the foot is obtained by cold plastic deformation, with higher accuracy and repeatability of the profile with respect to the realisation of a similar annular projection in the structure of the rubber support element by injection moulding or vulcanisation.

In addition to this, the realisation of the annular projection by cold plastic deformation of the metal has lower production costs compared to injection or vulcanisation of rubber or plastic. Likewise, the moulds or tools needed for cold plastic deformation of the metal are less expensive and less sophisticated than the ones used for injection/vulcanisation of plastic/rubber.

Finally, the said "metal/metal" cooperation between the helical spring and the annular projection on the threaded stem can be used repeatedly, without damage or wear, while the "metal/rubber" cooperation between the helical spring and the annular projection of the support element according to the prior technique tends to lose efficacy after two or three forced insertions of the final turns of the spring under the annular projection made of rubber /plastic.

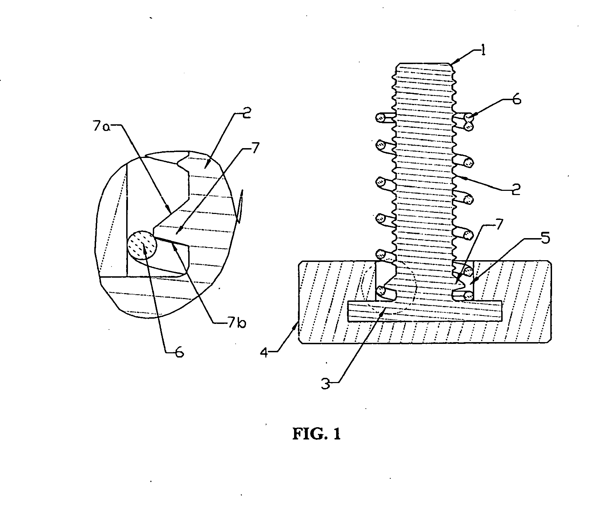

For purposes of clarity, the description of the invention continues with reference to the enclosed drawing, which is intended for purposes of illustration only and not in a limiting sense, whereby figure 1 is a cross-section of the foot of the invention (with enlarged detail) with a vertical median plane.

With reference to fig. 1, the foot of the invention (1) is normally composed of a threaded stem (2) protruding from a base (3), which is designed to be exactly and steadily housed inside the structure of a support element (4) made of rubber or equivalent material, which is provided with an upward cylindrical hole (5) from which the threaded stem (2) protrudes.

A traditional helical spring (6) is inserted along the threaded stem (2) and used to stabilise the position given to the levelling foot (1) by means of compression, in order to ensure perfect planarity of the electrical or electromechanical device.

As mentioned earlier, the inventive solution basically consists in the realisation of an annular projection (7) on the lower section of the threaded stem (2), designed to steadily hold the last turn (or turns) of the helical spring (6).

In particular, the annular projection (7) has an upper downward sloping profile (7a) and a lower horizontal profile (7b). The presence of the upper downward sloping profile (7a) guarantees that the turns of the spring (6) interfering with it tend to spread under the energetic thrust exerted on the spring from above downwards.

The spreading of the turns makes it possible to overcome the obstacle represented by the annular projection (7); and after overcome the said obstacle, due to the intrinsic flexibility of the spring (6), the turns tend to restore the original narrower position, which causes the efficacious interference between the lower horizontal profile (7b) and the projection (7).

It can be said that the fixing between the last turns of the spring (6) and the annular projection (7) of the threaded stem (2) is the consequence of traditional elastic "snap" coupling.

As shown in the figures, the position of the last turns of the spring (6) under the projection (7) of the threaded stem (2) is stabilised also because of the perimeter interference received from the internal walls of the cylindrical hole (5) of the support element (4) in which the threaded stem (2) is axially inserted.

Evidently, the projection (7) obtained on the threaded stem (2) can have an alternative profile with respect to the one shown in the enclosed figures, as long as it is equally capable of efficaciously and reliably holding the turns of the helical spring (6).

Finally, although in the present description the levelling foot of the invention is mounted on electrical or electromechanical devices, alternative uses are possible, as long as compatible with its technical-functional characteristics.

## Claims

1. Levelling foot designed to engage in use with a suitable threaded hole at the base of a device, the levelling foot (1) comprising:
- a threaded stem (2) protruding from a base (3),
- a support element (4) housing said base (3) inside it, said support element (4) being centrally provided with an upward cylindrical hole (5) from which the threaded stem (2) protrudes, wherein the threaded stem is provided with a lower annular projection
**characterised in that** the levelling foot comprises
- a helical spring (6) inserted along the threaded stem (2), so that the one end of the spring abuts against said base (3) of the threaded stem and in use the other end of the spring abuts against the base of the devise, in order to stabilise the position given to the levelling foot (1) by means of compression of said spring (6),
- and wherein the lower annular projection (7) is designed to hold the last the turn or turns of said helical spring (6).

2. Levelling foot as claimed in claim 1, **characterised by** the fact that the annular projection (7) is provided on the threaded stem (2) at such a height as to be contained in the cylindrical hole (5) of the support element (4).

3. Levelling foot as claimed in the first or both claims, **characterised in that** the annular projection (7) is provided with an upper downward sloping profile (7a) and a lower horizontal profile (7b).

## Patentansprüche

1. Höhenverstellbares Füßchen, das während des Gebrauchs in ein Gewindeloch an der Basis einer Vorrichtung eingreift, wobei das höhenverstellbare Füßchen (1) folgendes umfasst:
- einen Gewindeschaft (2), der aus einer Basis (3) hervorsteht,
- ein Trägerelement (4), in dem die Basis (3) ihren Sitz hat, wobei das Trägerelement (4) in der Mitte mit einem zylinderförmigen Loch (5) versehen ist, das nach oben zeigt und aus dem der Gewindeschaft (2) nach oben übersteht, wobei der Gewindeschaft mit einer unteren ringförmigen Auskragung (7) versehen ist,
**dadurch gekennzeichnet, dass** das höhenverstellbare Füßchen
- eine Schraubenfeder (6) umfasst, die so entlang des Gewindeschafts (2) eingesteckt ist, dass das eine Ende der Feder an der Basis (3) des Gewindeschafts anschlägt und das andere Ende der Feder während des Gebrauchs an der Basis der Vorrichtung anschlägt, um die durch Zusammendrücken der Feder (6) erzielte Position des höhenverstellbaren Füßchens (1) zu stabilisieren und
wobei die ringförmige Austragung (7) dazu dient, die Windung oder Windungen der Schraubenfeder (6) zurückzuhalten.

2. Höhenverstellbare Füßchen gemäß Anspruch 1, **dadurch gekennzeichnet, dass** die ringförmige Auskragung (7) auf dem Gewindeschaft (2) in einer solchen Höhe vorgesehen ist, dass sie innerhalb des Zylinderloches (5) des Trägerelements (4) enthalten ist.

3. Höhenverstellbares Füßchen gemäß dem ersten oder beiden vorstehenden Ansprüchen, **dadurch gekennzeichnet, dass** die ringförmige Auskragung (7) an der Oberseite ein nach unten abfallendes Profil (7a) und an der Unterseite ein im wesentlichen horizontales Profil (7b) besitzt.

## Revendications

1. Pied réglable en hauteur, destiné à s'engager, pendant l'usage, dans un trou fileté prévu à cet effet à la base d'un dispositif, le dit pied réglable en hauteur (1) comprenant :
- une tige filetée (2) qui déborde d'une base (3),
- un élément de support (4) logé sur la dite base (3) à son interne, le dit élément de support (4) étant doté centralement d'un trou cylindrique (5), tourné vers le haut, moyennant lequel la dite tige filetée (2) déborde sur la partie supérieure et où la dite tige filetée est dotée d'un débordement annulaire inférieur (7),
**caractérisé en ce que** le pied réglable en hauteur comprend
- un ressort hélicoïdal (6) enfilé le long de la dite tige filetée (2), de manière à ce que une extrémité du ressort va en butée contre la dite base (3) de la tige filetée et, pendant l'usage, l'autre extrémité du ressort va en butée contre la base du dispositif, aux fins de stabiliser la position donnée au pied réglable en hauteur (1) moyennant la compression du dit ressort (6), et
où le débordement annulaire inférieur (7) est destiné à retenir la spirale ou les spirales du dit ressort hélicoïdal (6).

2. Pied réglable en hauteur selon la revendication 1, **caractérisé en ce que** le dit débordement annulaire (7) est prévu sur la tige filetée (2) à une cote qui lui permet de rester contenu dans le dit trou cylindrique (5) de son support respectif (4).

3. Pied réglable en hauteur selon la première ou les deux revendications précédentes, **caractérisé en ce que** le dit débordement annulaire (7) présente sur la partie supérieure un profil en pente vers le bas (7a) et supérieurement un profil substantiellement horizontal (7b).
